# EUROPEAN PATENT APPLICATION

(11) **EP 0 855 318 A2**
(43) Date of publication of application: **29.07.1998**
(21) Application number: 98101086.1
(22) Date of filing: 22.01.1998
(51) Int. Cl.: B60T 8/00

(54) **Brake system for vehicle**

(30) Priority: 23.01.1997 JP 9978/97
(71) Applicant: DENSO CORPORATION, Kariya-City Aichi-Pref. 448 (JP)
(72) Inventor: Kiso, Takahiro, c/o Denso Corporation, Kariya-city, Aichi-pref. 448 (JP); Yogo, Kazutoshi, c/o Denso Corporation, Kariya-city, Aichi-pref. 448 (JP); Sawada, Mamoru, c/o Denso Corporation, Kariya-city, Aichi-pref. 448 (JP); Yonemura, Shuichi, c/o Denso Corporation, Kariya-city, Aichi-pref. 448 (JP)
(74) Representative: KUHNEN, WACKER & PARTNER

(57) **Abstract**

There are provided a first duct (A) connecting a brake fluid pressure producing source (3) to a first wheel cylinder (4, 5), a second duct (B) connecting the brake fluid pressure producing source to a second wheel cylinder (6, 7), and controlling means (100) for, by varying an in-duct flow diameter of the first duct or the second duct, establishing a difference between a transmission characteristic to the first wheel cylinder and a transmission characteristic to the second wheel cylinder of a brake fluid pressure in the brake fluid pressure producing source.

## Description

### CROSS REFERENCE TO RELATED APPLICATION

This application relates to Japanese Patent Applications No. H.9-9978 filed on January 23, 1997, and No. H.9-340170 filed on December 10, 1997, the contents of which are incorporated herein by reference.

### BACKGROUND OF THE INVENTION

### 1. Field of the Invention

This invention relates to a brake system for a vehicle, and particularly to a brake system for a vehicle which can secure vehicle stability at times of vehicle braking.

### 2. Related Art

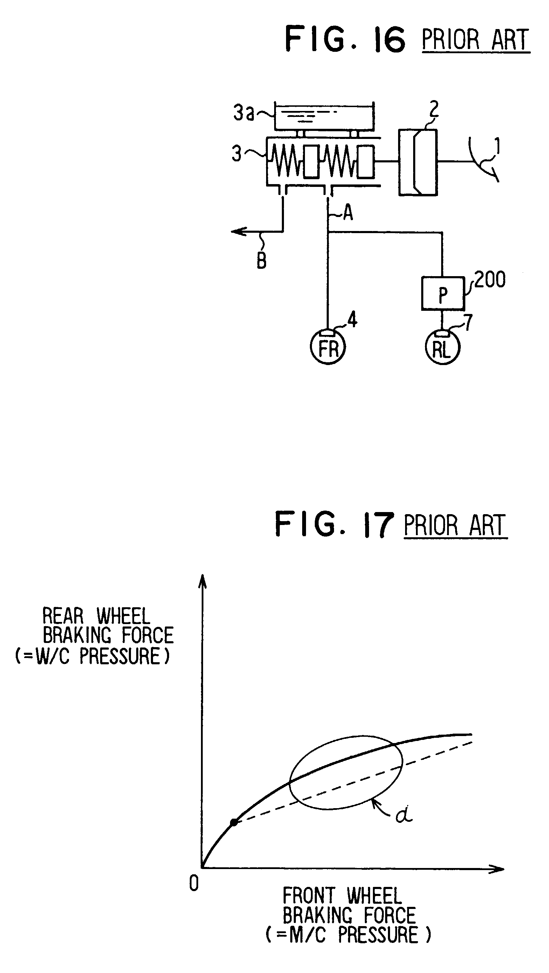

In conventional brake systems, a construction is used wherein the wheel braking forces exerted by the rear wheel side wheel cylinders become small compared to the front wheel side wheel cylinders so that front wheels fall in a locking state prior to rear wheels in order to prevent spin and the like and ensure stability at times of vehicle braking. For example as shown in Fig. 16, a known proportioning valve 200 or the like is provided in a rear wheel side brake duct in a first brake line system A. A brake fluid pressure from a master cylinder 3 is pressure-reduced by the proportioning valve 200 while being transmitted to a wheel cylinder 7. The solid line shown in Fig. 17 is an ideal braking force distribution line relating to braking forces exerted in the front and rear wheels, and the front-rear braking force ratio on this ideal braking force distribution line is an ideal braking force distribution with which the braking distance can be most shortened such that the front and rear wheels lock simultaneously. Normally, by the action of the above-mentioned proportioning valve or the like, the front-rear braking force distribution is made that shown with a dashed line in Fig. 17. The reference number "3a" in Fig. 16 points out a master reservoir, "1" is a brake pedal, "2" is a vacuum booster, and "4" is a front wheel side wheel cylinder.

However, when as conventionally a proportioning valve 200 is used, when the master cylinder pressure becomes greater than a predetermined level this master cylinder pressure is always lowered before being made to act on the rear wheel side wheel cylinders. In this kind of case, in the brake fluid pressure acting on the rear wheel side wheel cylinders, the loss with respect to effective use of the master cylinder pressure is large. Also, when a proportioning valve or the like is used, because it is very difficult to vary the inclination of the dashed line in Fig. 17 part-way along, normally it is set to the kind of straight predetermined inclination shown. In this case, when the front wheel braking force has become large i.e. the master cylinder pressure has become large (region α), because the dashed line greatly deviates from the ideal braking force distribution, the braking forces in the wheel cylinders of the rear wheels are insufficient.

The present invention has a first object providing a brake system which can use effectively to the utmost a brake fluid pressure produced in a brake fluid pressure producing source.

It is a second object of the present invention to, by varying the transmission characteristics to the wheel cylinders of a brake fluid pressure produced in a master cylinder which is a brake fluid pressure producing source i.e. the braking characteristics with respect to a braking operation of a driver, with matching to braking conditions such as road surface conditions or sudden braking, ensure vehicle stability during an early stage of braking effected by the brake fluid pressure.

To achieve the above-mentioned objects, in a brake system for a vehicle according to the present invention, there are provided controlling device for, by varying an induct flow diameter through which brake fluid flows in a first or a second duct, establishing a difference between a first transmission characteristic of a brake fluid pressure produced in a brake fluid pressure producing source which is transmitted to first wheel braking force producing means and a second transmission characteristic thereof which is transmitted to second wheel braking force producing means. As a result, the dynamic flow characteristics of the brake fluid which is transmitted to either the first or second wheel braking force producing means can be controlled. That is to say, when the above-mentioned in-duct flow diameter is made small, the pressure increase rate is made slow and a lag arises in the pressure increase gradient of the brake fluid pressure acting on either one of the first and second wheel braking force producing means comparing to that acting on the other of the first and second wheel braking force producing means. On this basis it is possible to control the vehicle body to a stable side according to vehicle environment such as uphill and downhill slopes and road surface µ, longitudinal acceleration of the vehicle (vehicle deceleration), vehicle side movement manifested by vehicle transverse acceleration, oversteer and understeer, vehicle states such as braking from high-speed travel and vehicle load states, or control states such as turning braking states detected based on steering angle and so on.

When the flow of brake fluid becomes a static state, the throttle effect of the variation in the in-duct flow diameter weakens with time and the brake fluid pressure acting on the wheel braking force producing means for which this flow diameter has been throttled becomes substantially equal to the brake fluid pressure acting on the wheel braking force producing means of the non-control object wheels. Therefore, if travel stability of the vehicle is ensured by varying the transmission characteristics of the brake fluid pressure due to variation of the flow diameter so that a difference is established between the wheel braking forces that the first and second wheel braking force producing means produce, the brake fluid pressure produced in the brake fluid pressure producing source can be utilized as effectively as possible. Further, because it is possible to exert a high wheel braking force it is possible to shorten braking distance. Because a difference is provided in the wheel braking forces produced in the first and second wheel braking force producing means by variation of a flow diameter, there is no cutting off of the flow of brake fluid between the brake fluid pressure producing source and the first and second wheel braking force producing means. Consequently, when applied to a brake system wherein by a brake pedal operation from a driver a brake fluid pressure is produced in a brake fluid pressure producing source, there is no adverse affect on the pedal operation feeling of the driver.

A brake system according to the present invention may comprises a first control valve which is disposed in a first duct and has two positions of a throttling position for exerting a flow resistance resulting from throttling in the flow route of the brake fluid and an open position having substantially no flow resistance, a second control valve which is disposed in a second duct and has two positions of a throttling position for exerting a flow resistance resulting from throttling in the flow route of the brake fluid and an open position having substantially no flow resistance, and controlling means for establishing a difference between a transmission characteristic to the first wheel braking force producing means and a transmission characteristic to the second wheel braking force producing means of a brake fluid pressure in the brake fluid pressure producing source, by varying an in-duct flow diameter as the result of controlling either the first or the second control valve from the open position to the throttling position.

Also, the above-mentioned difference in transmission characteristics may be established at the time of a pressure increase in the brake fluid pressure acting on the first and second wheel braking force producing means. At this time, by means of a flow resistance resulting from the throttling, it is possible to stagger the pressure increase phase of the brake fluid pressure to the first wheel braking force producing means and the pressure increase phase of the brake fluid pressure to the second wheel braking force producing means. That is, a difference can be provided in the pressure increase gradients, the pressure increase rates and the pressure increase amounts of the brake fluid pressures acting on the first and second wheel braking force producing means. As a result, it is possible to improve the travel stability of the vehicle.

Also, a construction for carrying out anti-skid control may be added to the brake system. In this case, at a time of increase of the brake fluid pressures acting on the first and second wheel braking force producing means, a brake fluid pressure formed by brake fluid delivery of a pump driven when anti-skid control for suppressing wheel slip is executed may be used as a base pressure instead of the brake fluid pressure produced in the brake fluid pressure producing source. As a result, even when the flow diameter is made small and brake fluid flows to one of the first and second wheel braking force producing means with a throttling action, the pressure increase gradient is greater than when the brake pressure in the brake fluid pressure producing source is used as the base pressure. Therefore, a large wheel braking force is quickly exerted.

A control valve having two positions which is duty controlled may be used as the first and/or the second control valve. In this case, apart from the point of driver's pedal operation feeling, the same effects can be obtained.

Also, the brake system according to the present invention may comprise throttling means disposed in a duct for substantially producing an orifice effect by throttling a brake fluid flow area in the duct, and controlling means for varying a transmission characteristic to a wheel cylinder of a master cylinder pressure produced due to a brake pedal operation of a driver by controlling the throttling means. That is, it is characterized in that the transmission characteristics of brake fluid pressure with respect to control operations of a brake pedal of a driver are changed. For example, because a sudden brake operation on a low µ road is dangerous, the increase of braking force in an initial stage of braking at a time of sudden braking is suppressed by the throttling means. Also, it can be made so that only that the vehicle is traveling on a low µ road is determined and the transmission characteristics of braking are changed in response to such a determination.

Also, the brake system according to the present invention may comprise throttling means disposed in a duct for substantially producing an orifice effect by throttling a brake fluid flow area in the duct, and switching means for causing the throttling means to exert the orifice effect on the basis of a selection of the driver. If the switching means which the driver operates manually is provided in this way, it is useful when the vehicle is on the low µ road or when children or the like are on board, and therefore it is desired that stopping or braking be gentle according to the judgement of the driver.

Thus this invention may be used with the object of ensuring vehicle stability at times of low µ road braking or sudden braking by carrying out change of the braking characteristics with respect to brake operation of the driver.

### BRIEF DESCRIPTION OF THE DRAWINGS

These and other objects, features and characteristics of the present invention will be appreciated from a study of the following detailed description, the appended claims, and drawings, all of which form a part of this application. In the drawings:
Fig. 1 is a schematic view illustrating a construction of a brake system according to a first embodiment of the present invention;
Fig. 2 is a flow chart showing control flow of the first embodiment;
Figs. 3A and 3B are time charts showing the operation of the first embodiment;
Fig. 4 is a flow chart showing control flow of a second embodiment;
Figs. 5A and 5B are time charts showing the operation of the second embodiment;
Fig. 6 is a flow chart showing control flow of a third embodiment;
Fig. 7 is a time chart showing the operation of the third embodiment;
Fig. 8 is a time chart showing the operation of the third embodiment;
Fig. 9 is a schematic view illustrating a construction of a brake system according to a fourth embodiment of the present invention;
Fig. 10 is a flow chart showing control flow of the fourth embodiment;
Fig. 11 is a time chart showing the operation of the fourth embodiment;
Fig. 12 is a flow chart showing control flow of a fifth embodiment;
Fig. 13 is a time chart showing the operation of the fifth embodiment;
Fig. 14 is a flow chart showing control flow of a sixth embodiment;
Fig. 15 is a schematic view illustrating a construction of a brake system according to an other embodiment 1 of the present invention;
Fig. 16 is a schematic view illustrating a construction a brake system of the prior art; and
Fig. 17 is a braking characteristic chart in the prior art.

### DETAILED DESCRIPTION OF THE PREFERRED EMBODIMENT

Preferred embodiments of the present invention will now be described on the basis of the drawings.

### (First Embodiment)

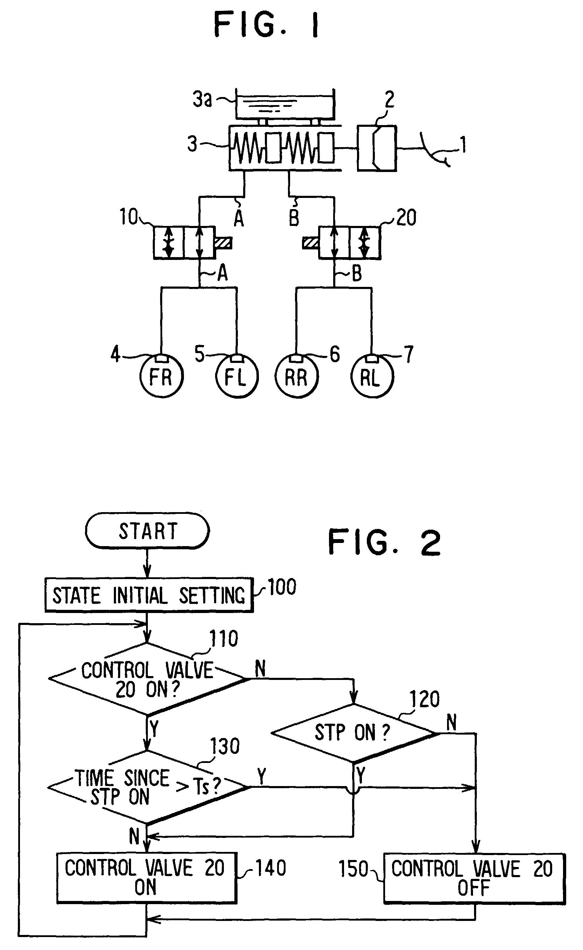

Fig. 1 is a schematic view illustrating a construction of a first embodiment. A brake pedal 1 on which a stepping operation is carried out by a driver, a booster 2 for in correspondence with a stepping operation force to the brake pedal 1 boosting this stepping operation force, and a master cylinder 3 for producing a master cylinder pressure PM corresponding with the stepping operation force boosted by the booster 2 are provided as a brake fluid pressure producing source. This master cylinder 3 has its own master reservoir 3a, and this master reservoir 3a holds brake fluid at a pressure substantially the same as atmospheric pressure. For the booster 2 a known vacuum booster is employed, and it produces a boosting action in correspondence with a pedal stroke of the brake pedal 1 by using a differential pressure between an intake manifold negative pressure of an engine and atmospheric pressure.

From cylinder chambers of the master cylinder 3 a first brake line system A and a second brake line system B extend, and a first wheel cylinder 4 for generating a wheel braking force on a right front wheel FR and a second wheel cylinder 5 for generating a wheel braking force on a left front wheel FL are connected to the first brake line system A. To the second brake line system B a third wheel cylinder 6 for generating a wheel braking force on a right rear wheel RR and a fourth wheel cylinder 7 for generating a wheel braking force on a left rear wheel RL are connected.

In the first brake line system A and the second brake line system B respectively a first control valve 10 and a second control valve 20 are disposed. These control valves 10, 20 are two-position valves having two positions that are an open position (the state shown in the figure) which is a normal position and a throttling position wherein the sectional area for brake fluid flow is smaller than that of the open position and a throttling action is substantially exerted. The sectional area for brake fluid flow of the open position in these control valves 10, 20 is formed smaller than the sectional areas of the first and second brake line systems A, B, but they have a flow sectional area (flow diameter) of a level such that in normal braking the flow resistance to brake fluid flowing through the first and second control valve 10, 20 of the open position does not become too large.

In a brake system not having a known proportioning valve in a rear wheel side brake line system, by making the area of a brake pad for the rear wheel small or making the wheel cylinder diameter therefor small compared to that for the front wheel it may be set so that, even if the same brake fluid pressure has been applied in the front wheel side wheel cylinder and the rear wheel side wheel cylinder, the wheel braking force produced is small on the rear wheel compared to the front wheel.

Next, on the basis of Fig. 2, an example of a control flow with respect to the control valves 10, 20 will be described. Along with ON operation or the like of an ignition switch of the vehicle, processing is started in an ECU not shown in the drawings, and in a step 100 state initial setting of time counters and the like is carried out. Then in step 110 it is determined whether or not current supply to the control valve 20 disposed in the second brake line system B connected to the rear wheel side wheel cylinders is being carried out. In the ON state of the control valve 20, the valve position is the throttling position. When a negative determination is made in this step 110 processing proceeds to step 120 and it is determined whether or not a stop switch not shown in the drawings is ON-state. The stop switch becomes ON-state in a braking state wherein the brake pedal has been stepped on through more than a predetermined stroke and substantially a braking force is being applied to the wheels. When in this step 120 a negative determination is made, processing proceeds to step 150 and the control valve 20 is held in an OFF-state. The OFF-state of this control valve 20 is a state wherein the valve position is the open position.

When in step 120 an affirmative determination is made, processing proceeds to step 140 and makes the control valve 20 ON-state. After this, since an affirmative determination is made in the step 110, processing proceeds to step 130. In this step 130 it is determined whether or not a predetermined time TS has elapsed since ON of the stop switch. If a negative determination is made in step 130 processing proceeds to step 140 and makes the valve position of the control valve 20 the throttling position until the time TS elapses after ON of the stop switch. When the time TS has elapsed after ON of the stop switch in step 130 an affirmative determination is made and processing proceeds to step 150. In this step 150, the valve position of the control valve 20 is made the open position.

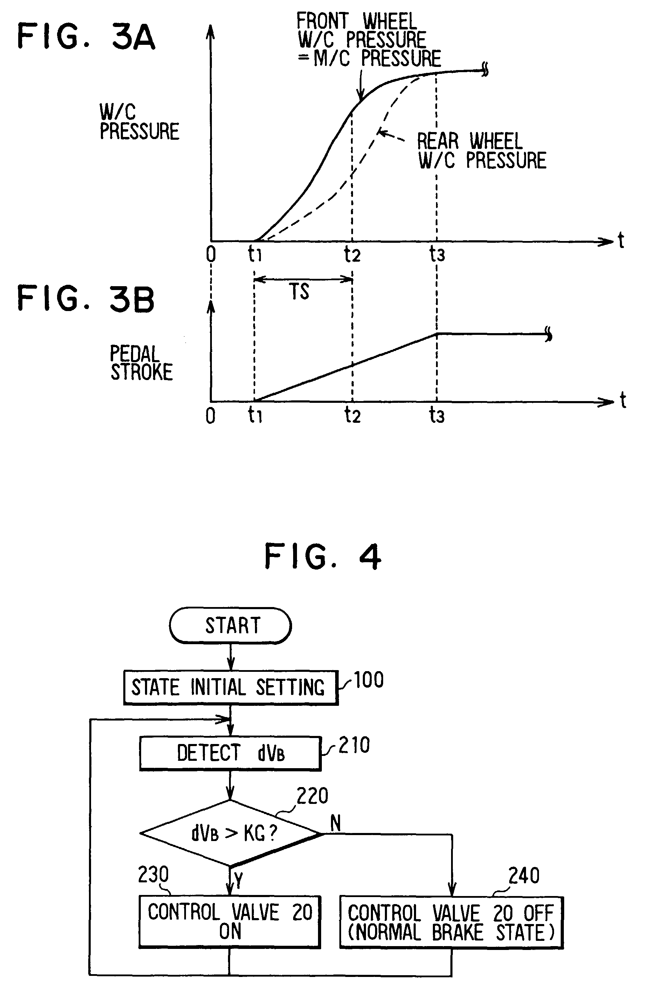

The operations and effects of when this kind of flow is executed will now be described on the basis of Figs. 3A and 3B. If it is supposed that at a time t1 the brake pedal is stepped on and the stop switch becomes ON-state, wheel cylinder pressures arise in wheel cylinders 4 through 7 by receiving the master cylinder pressure. At this time, a brake fluid pressure substantially equal to the master cylinder pressure is transmitted to the front wheel side wheel cylinders 4, 5. Then, the gradient of the pressure increase of the wheel cylinder pressure of the wheel cylinders 4, 5 becomes as shown by a solid line in Fig. 3A. Because the first control valve 10 is in the open position the gradient is substantially equal to the master cylinder pressure and there is almost no pressure increase lag.

The wheel cylinder pressure of the wheel cylinders 6, 7 of the rear wheels changes as shown with a dashed line in Fig. 3A. That is, because for the duration of the time TS (the period from the time t1 to the time t2) the control valve 20 is in the throttling position, compared to the pressure increase gradient of the master cylinder pressure and the wheel cylinder pressure for the front wheels it is a small pressure increase gradient. Also, after the time t2, because the control valve 20 is brought to the open position, the pressure increase gradient of the rear wheel side wheel cylinders 6, 7 becomes a pressure increase gradient equal to or greater than the pressure increase gradient of the master cylinder 3 and the front wheel side wheel cylinders 4, 5. At the time t3 at which there ceases to be any change in the pedal stroke, the wheel cylinder pressure of the front wheel side wheel cylinders 4, 5 and the wheel cylinder pressure of the rear wheel side wheel cylinders 6, 7 become substantially equal. In this way, it is possible to produce a time difference between the increase of the front wheel side wheel cylinder pressure and the increase of the rear wheel side wheel cylinder pressure. Further, when the pressure increase characteristics of the wheel cylinder pressures have become static characteristics or at the time point of the time t3 which is after elapsing of a predetermined time, the wheel cylinder pressures of the front and rear wheels can be made equal. When return of the brake pedal 1 by the driver has been carried out for example between the times t2 and t3, at this time point the increase of the wheel cylinder pressures ends. Due to the difference in the pressure increase gradients resulting from the throttling position of the second control valve a pressure difference arises between the front wheel side wheel cylinder pressure and the rear wheel side wheel cylinder pressure. In this way, by means of a difference arising in the pressure increase amounts between the wheel cylinders and a pressure difference consequently occurring or by means of a difference arising in the pressure increase gradient (amount) of the wheel cylinder pressures with respect to the pressure increase gradient (amount) of the master cylinder pressure, it is possible to ensure stability of the vehicle body. The master cylinder pressure is a pressure formed along with a braking operation (pedal operation) of a driver. Therefore, the above-mentioned operation can be described as an operation wherein by changing the braking characteristics of a braking operation of the driver when transmitting the master cylinder pressure to the wheel cylinders it is possible to ensure vehicle body stability.

Also, because a time difference is produced in the front wheel side and rear wheel side wheel cylinder pressures, even without disposing a known proportioning valve for attenuating the master cylinder pressure in the rear wheel side brake line system B as shown in Fig. 1, it is possible to make the increase of the rear wheel side wheel cylinder pressure small compared to the master cylinder pressure or the front wheel side wheel cylinder pressure. As a result, it is possible to make the braking force distribution in the vehicle braking forces of the front and rear wheels approach an ideal braking force distribution. Also, if by means of a proportioning valve the brake fluid pressure acting on the rear wheel side wheel cylinders is attenuated, as is generally known the farther the master cylinder pressure (the front wheel side wheel cylinder pressure) rises the more the brake fluid pressure value acting on the rear wheel side wheel cylinders deviates from the ideal braking force distribution line and the rear wheel side brake fluid pressure becomes insufficient. However, if control is carried out as in this first embodiment the rear wheel side wheel cylinder pressures do not become insufficient. Also, because at the time t3 time point ample wheel cylinder pressures of the rear wheels exist, it is possible to exert an ample vehicle braking force at the rear wheel side wheels and it is also possible to suppress the vehicle body dive characteristic of the rear wheel side floating up. The flow sectional area of the throttling position and the predetermined time TS can be set freely in accordance with vehicle specifications. In an embodiment of control of this kind, in the construction shown in Fig. 1 it is possible to dispense with the first control valve 10 provided in the front wheel side brake line system A.

### (Second Embodiment)

A second embodiment will now be described on the basis of Fig. 4. Because a brake system construction the same as that of the first embodiment can be employed, it will be described on the basis of the construction shown in Fig. 1. In this second embodiment, to detect a vehicle deceleration, an acceleration sensor or the like not shown in the drawings is added. Or, known wheel speed sensors may be mounted at the wheels and on the basis of wheel speeds obtained from outputs of these wheel speed sensors a vehicle speed calculated and the vehicle deceleration calculated from change in this calculated vehicle speed.

Following the flow chart of Fig. 4 the second embodiment will be described. After state initial setting has been done in the same way as in the first embodiment, in step 210 a vehicle deceleration is detected from the output of an acceleration sensor or the like. In step 220, when the vehicle deceleration dVB has become greater than a predetermined deceleration KG, processing proceeds to step 230. On the other hand, when a negative determination has been made at step 220, processing proceeds to step 240. That is, when vehicle braking with deceleration greater than a predetermined deceleration level has been carried out by the brake pedal, i.e., the vehicle deceleration has exceeded a predetermined deceleration KG, the rear wheel side control valve 20 is made ON and brought to the throttling position. When the vehicle deceleration is less than the predetermined deceleration KG, the control valve 20 remains in the open position and in its normal state. For the value of the predetermined deceleration KG, for example about 0.4G can be applied. In this case, the control valve 20 is made ON at the time of somewhat high deceleration (G) braking.

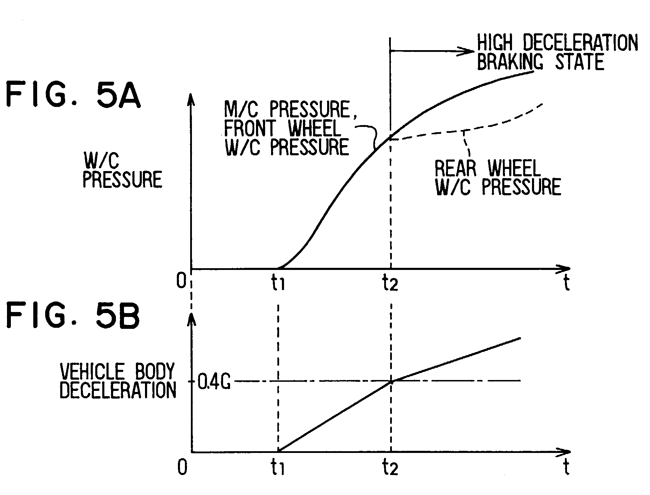

The operations and effects of when control is carried out in this way will be described on the basis of Figs. 5A and 5B.

At the time t1 of Fig. 5 a pedal operation causes a master cylinder pressure to be produced and such a produced master cylinder pressure is applied to wheel cylinders. It will be supposed that from the time t1 to t2 the vehicle deceleration dVB is below the predetermined deceleration KG and at the time t2 the vehicle deceleration dVB exceeds the predetermined deceleration KG. When this happens, because the control valve 20 is brought to the throttling position from the open position at the time t2, a difference arises in the pressure increase gradients between the front wheel side wheel cylinder pressure shown with a solid line and the rear wheel side wheel cylinder pressure shown with a dashed line. That is, whereas up to the time t2 the master cylinder pressure and the front wheel and rear wheel side wheel cylinder pressures were equal, the rear wheel side wheel cylinder pressure becomes a pressure value smaller compared to the front wheel side wheel cylinder pressure and the master cylinder pressure.

When control is carried out in this way, the following kinds of effect can be obtained. That is, when the vehicle deceleration is not very large, because load movement of the vehicle body is small, it is not necessary to provide a very large difference in the braking force distribution in the front and rear wheels. However, if a vehicle deceleration becomes greater than a predetermined level, there is a possibility of the rear wheels locking early due to a reduction of the ground load of the rear wheel side caused by load movement. In this case, if for example a vehicle deceleration dVB greater than 0.4G occurs, because the amount of brake fluid flowing to the rear wheel side wheel cylinders 6, 7 is throttled by the control valve 20, it is possible to make the rear wheel side wheel cylinder pressure low compared to the front wheel side. As a result, a braking force distribution near to the ideal braking force distribution can be obtained and rear wheel early locking can be prevented.

When a high braking G is occurring, it can be inferred that it is a sudden braking state. At this time, not only the rear wheel side control valve 20 but also the front wheel side control valve 10 may be brought to its throttling position so as to suppress initial braking pressure in the sudden braking state. In detail, both of the control valves may be brought to the throttling position only when a high braking G has occurred in a short time within a predetermined time from brake-pedal stepping.

When in step 220 of Fig. 4 an affirmative determination has been made it can be inferred that it is a panic braking state originated by the driver. If the friction coefficient (µ) of the travel road surface is somewhat small there is a possibility of wheel locking occurring instantly. However, it is possible to avoid this by control valves 10, 20 brought to the throttling position. Also, if the time for which the front wheel side control valve 10 is brought to the throttling position is made shorter than the time of the rear wheel side control valve 20 and the front wheel side control valve 10 is then brought to the open position from the throttling position, while front wheel locking at the time of initial braking in a panic state is avoided and vehicle stability is maintained, precisely a large brake fluid pressure is transmitted to the front wheel side wheel cylinders and therefore the braking distance can be shortened. If this is done, even if the brake pedal operation of the driver is a sudden operation, because it is possible to moderate in the initial stage of braking the transmission characteristics to the wheel cylinders of the pedal operation of the driver, i.e. the braking characteristics, it is possible to ensure initial vehicle stability at a time of sudden braking of the vehicle. Because throttling is used, even if the control valves 10, 20 which are two-position valves of a throttling position and an open position are left in the throttling position at a time of sudden braking, they only delay the transmission characteristics of the braking operation at an initial stage. The transmission characteristics of thereafter are such that there is almost no difference in the pressure increase gradients of the master cylinder pressure and the wheel cylinder pressures.

To precisely detect a sudden braking state in step 220 of Fig. 4, the detection may be carried out with the pedal stepping speed of the driver or the pedal stepping torque being above a predetermined level or the master cylinder pressure being above a predetermined level as a condition.

Also, in addition to it being this sudden braking, it may be detected that the vehicle is in a low µ road travel state. If it is a sudden braking state and a low µ road travel state, both of the control valves 10, 20 may be brought to the throttling position. The vehicle body falling into instability in the initial braking state of sudden braking is most anticipated during low µ road travel. For example, if all the wheels lock as soon as the brake pedal is suddenly stepped on when the vehicle travels on an icy road, even if anti-skid control is executed thereafter the vehicle body becomes somewhat unstable. However if the transmission characteristics to the wheel cylinders of the braking operation from the driver are delayed, vehicle stability can be ensured at a stage before anti-skid control starts and anti-skid control also can be effectively used.

Further, for a braking system having a brake assist mechanism for in a panic braking state making the stepping force of the driver greater than the normal boost ratio of the brake booster to reduce the braking distance, still more, the possibility of going into anti-skid control instantly at a time of sudden braking is high. In particular when brake assist is executed in sudden braking operation on a low µ road, anti-skid control is executed within an instant. In anti-skid control thus executed, when the decrease of the wheel cylinder pressures starts, the braking of the vehicle is extremely moderated at the time point at which the pressure decrease starts and sometimes the braking distance actually lengthens and sometimes the driver is made to feel uncertain. Therefore, in a brake system wherein a brake assist function has been employed, particularly in initial braking at a time of sudden braking, when the braking characteristics with respect to pedal operation which is the braking operation of the driver are moderated and the increase of the wheel cylinder pressures is somewhat delayed, anti-skid control does not come in immediately and for that time ample vehicle braking is carried out. As a result, the braking distance can be made shorter and also the uncertain feeling of the driver can be removed. Brake assist can be carried out by introducing a negative pressure lower than the intake manifold negative pressure into the negative pressure chamber of the brake booster or a higher pressure than atmospheric pressure into the atmospheric pressure chamber of the brake booster, with a compressor or the like.

### (Third Embodiment)

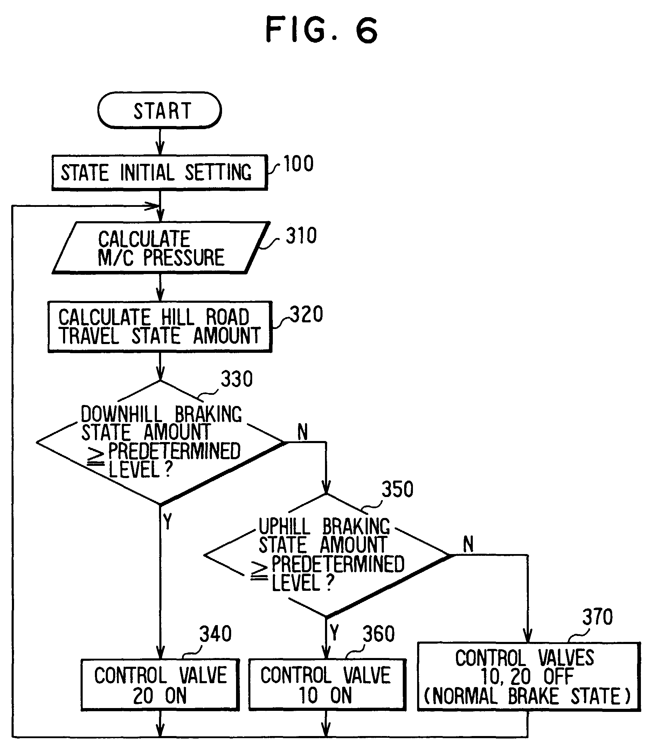

Next a third embodiment will be described on the basis of the flow chart of Fig. 6. For the construction of a brake system employed in this third embodiment, the construction shown in Fig. 1 can be employed.

First, state initial setting is carried out in step 100, and in step 310 a master cylinder pressure PM is calculated on the basis of an output signal from a master cylinder pressure sensor not shown in Fig. 1. In the following step 320 a hill road travel state amount is calculated. As this hill road travel state amount, for example a hill gradient may be obtained on the basis of an output signal from a gradient sensor not shown in the drawings.

Next in step 330, it is determined whether or not a downhill braking state amount is greater than a predetermined level. The downhill braking state amount is determined according to whether or not the above-mentioned hill gradient is above a predetermined level on the negative side and also the master cylinder pressure PM is greater than a predetermined pressure KPM. For this predetermined pressure KPM, for example about 15kgf/cm² is set. That is, it is set so that an affirmative determination is made in ordinary braking gentler than sudden braking. When an affirmative determination is made here, in step 340 the control valve 20 is made ON and brought to the throttling position.

When in step 330 a negative determination is made and processing proceeds to step 350, in this step 350 it is determined whether or not an uphill braking state amount is greater than a predetermined level. The uphill braking state amount is determined according to whether or not the above-mentioned hill gradient is above a predetermined level on the positive side and also the master cylinder pressure PM is greater than a predetermined pressure LPM. For this predetermined pressure LPM, for example about 40kgf/cm² is set. That is, it is set so that an affirmative determination is made in strong braking such as sudden braking. On an uphill slope, because load movement due to braking is suppressed by the action of the gradient of the uphill slope, only in strong braking it is necessary to provide a difference between the braking forces exerted by the front and rear wheels by means of the throttling effect of the control valve 10. By making the standards for braking state determination different between uphill slopes and downhill slopes in this way, it is possible to carry out a braking operation according to the vehicle state such as load movement of the vehicle body. In other words, it is only necessary to vary the pressure increase gradient of the wheel cylinder pressure of either the front wheels or the rear wheels in accordance with the vehicle state such as load movement.

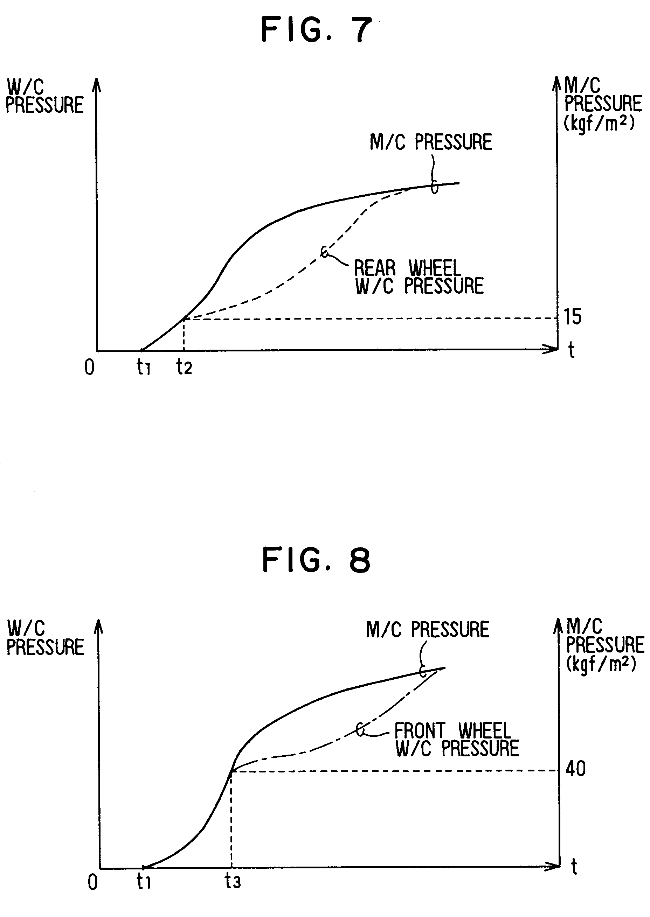

The operations and effects of the third embodiment will be described on the basis of Fig. 7 and Fig. 8.

It will be supposed that at a time t1 a vehicle braking force originating in stepping of the brake pedal has started to be exerted. First, on the basis of Fig. 7 the operation on a downhill slope will be described by the use of the rear wheel cylinder pressure shown with a dashed line. If it is supposed that at the time t2 it has been determined that the downhill braking state amount is greater than a predetermined level, because the control valve 20 is made ON and the brake fluid amount flowing to the rear wheel side wheel cylinders 6, 7 is throttled. As a result, the pressure increase gradient of the wheel cylinder pressure of the rear wheel side wheel cylinders 6, 7 is suppressed. The front wheel side wheel cylinder pressure at this time becomes a pressure equal to the master cylinder pressure PM shown with a solid line. Also, from time t1 to t2 at least the wheel cylinder pressures of the front and rear wheels are equal. In this way, after the time t2 as a result of the control valve 20 being made ON, the vehicle braking forces that the front and rear wheels exert approach the ideal braking force distribution and the stability of the vehicle increases.

Next on the basis of Fig. 8, operation on an uphill slope will be described by the use of the front wheel cylinder pressure shown with a broken line. When at the time t3 it has been determined that the uphill braking state amount has become greater than a predetermined level, because the control valve 10 is made ON and compared to the pressure increase gradient of the rear wheel side wheel cylinder pressure the pressure increase gradient of the front wheel side wheel cylinder pressure is suppressed, a difference arises in the vehicle braking forces between the front and rear wheels. As a result, the vehicle braking forces of the front and rear wheels approach the ideal braking force distribution. Therefore, the stability of the vehicle can be increased.

### (Fourth Embodiment)

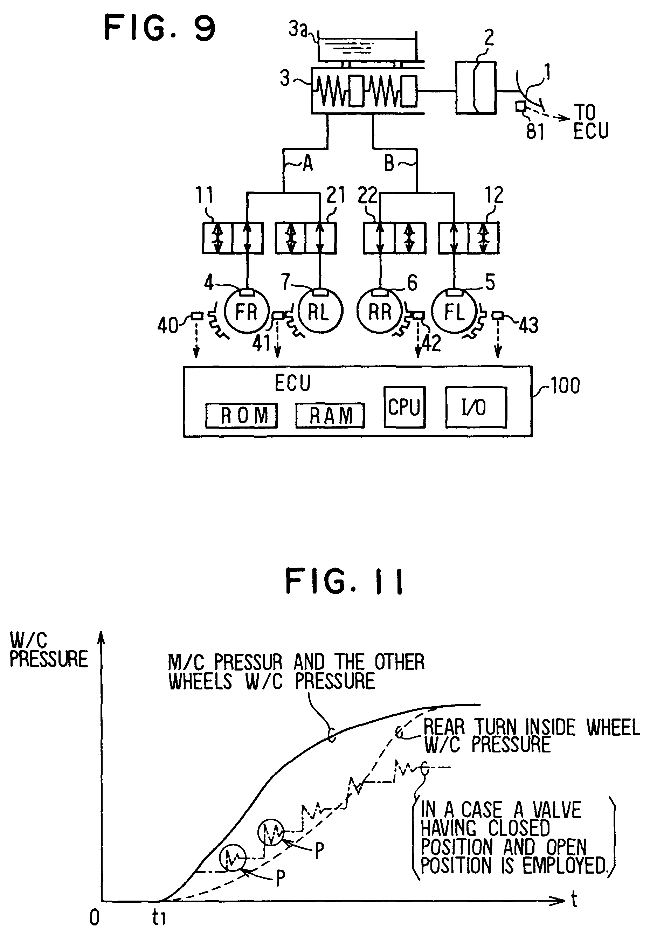

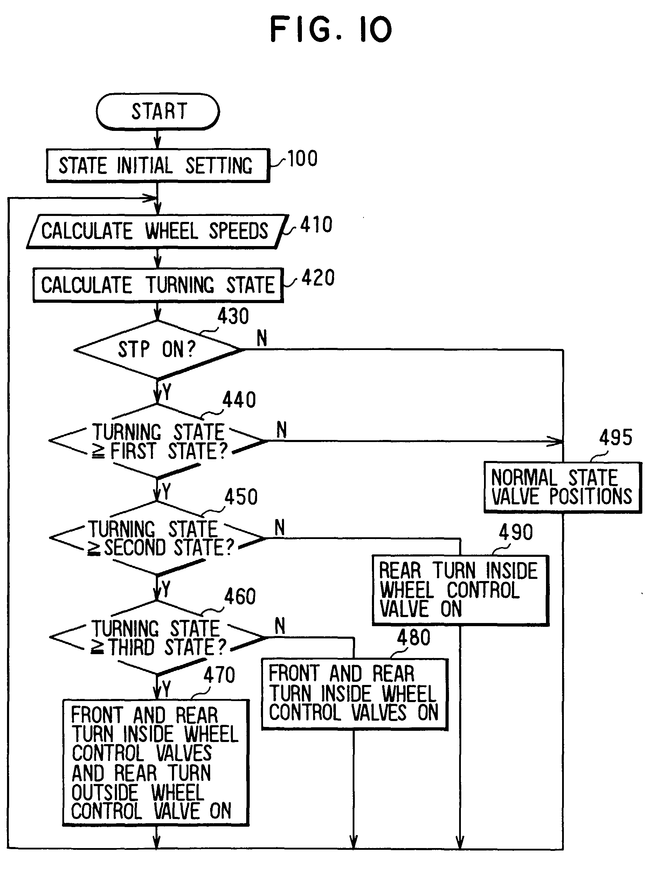

Next, a fourth embodiment will be described on the basis of the construction view of a brake system of Fig. 9 and the flow chart of Fig. 10. Parts having the same action as the brake system construction shown in Fig. 1 have been given the same reference numerals and their description will be omitted. In this Fig. 9, a so-called diagonal brake system wherein the wheel cylinders 4 and 7 of the right front wheel FR and the left rear wheel RL are connected to a first brake line system A and the wheel cylinders 5, 6 of the left front wheel FL and the right rear wheel RR are connected to a second brake line system B is applied.

In the brake system shown in Fig. 9, a stop switch 81 for detecting stepping greater than a predetermined level of the brake pedal and wheel speed sensors 40 through 43 for detecting the wheel speeds of the wheels are shown. Output signals from the stop switch 81 and the wheel speed sensors 40 through 43 are outputted to an electronic control unit (ECU) 100. The ECU 100 comprises a ROM, a RAM, a CPU, and an I/O interface.

In the construction shown in this Fig. 9, two-position valves having an open position for normal braking and a throttling position for exerting an orifice effect are provided with respect to each of the wheel cylinders 4 through 7 of the wheels.

Next, control flow in the fourth embodiment will be described on the basis of Fig. 10.

In step 100 state initial setting is carried out, and in step 410, on the basis of the output signals from the wheel speed sensors 40 through 43, wheel speeds of the wheels are calculated. In step 420, on the basis of the wheel speeds VW of the wheels, a turning state of the vehicle is detected by calculation. This turning state is detected on the basis of the size of a difference in the wheel speeds of the left and right front wheels or the left and right rear wheels. Detection of the turning state may for example alternatively be carried out on the basis of an output signal from a steering sensor not shown in the drawings or an output signal from a transverse acceleration sensor not shown in the drawings.

In step 430 it is determined whether or not the stop switch 81 has been made ON. When a negative determination has been made here processing proceeds to step 495 and the normal braking state is kept as it is. That is, because the vehicle is not in a braking state, the control valves 11, 12, 21, 22 are still in their open positions.

When in step 430 an affirmative determination has been made processing proceeds to step 440. In this step 440, it is determined whether or not the turning state is greater than a first predetermined turning state. The relationship with second and third predetermined turning states in step 450 and step 460 as follows: (first predetermined turning state) < (second predetermined turning state) < (third predetermined turning state). That is, they are set to gradually change from a value corresponding to a gentle turning state to a value corresponding to a sharp turning state. When here it is determined that the turning state is smaller than the first predetermined turning state, i.e., when it is determined that the absolute value of the wheel speed difference between the left and right wheels is below a first predetermined value, it is determined to be a very gentle turning state such that it is not necessary to provide a vehicle braking force difference in the left and right wheels, and processing proceeds to step 495 and the normal state valve positions of the control valves are maintained. When in step 440 an affirmative determination is made, processing proceeds to step 450 and it is determined whether or not the turning state is greater than the second predetermined turning state. That is, it is determined whether or not the absolute value of the wheel speed difference between the left and right wheels is greater than a second predetermined value larger than the first predetermined value. When a negative determination is made here it is deemed to be a gentle turning state and processing proceeds to step 490. In step 490 the control valve of the wheel on the turn inner wheel side in the rear wheels (either the control valve 21 or the control valve 22) is made ON and brought to the throttling position. Which of the left and right rear wheels is the wheel on the turn inner wheel side is determined according to the sign of the value of the wheel speed difference between the left and right wheels. For example when the value of the wheel speed difference between the left and right wheels, which is derived by subtracting the wheel speed of the right wheel from the wheel speed of the left wheel, is negative, it is deemed to be a left turning state and the control valve 21 corresponding to the wheel cylinder 7 of the left rear wheel is made ON. In this way, in a gentle turning state, the pressure increase gradient of the wheel cylinder pressure of the rear turn inside wheel, of which the ground load lightens the most, is suppressed and the stability of the vehicle is increased.

When in step 450 an affirmative determination is made, processing proceeds to step 460 and it is determined whether or not the turning state of the vehicle is greater than the third predetermined turning state. That is, it is determined whether or not the absolute value of the wheel speed difference between the left and right wheels is greater than a third predetermined value greater than the second predetermined value. When here a negative determination is made it is deemed to be a somewhat sharp turning state and processing proceeds to step 480. In this step 480, the control valve corresponding to the turn inside wheel of the rear wheels and the control valve corresponding to the turn inside wheel of the front wheels are made ON. By this means, because the pressure increase gradient of the turn inside wheel side wheel cylinders of the front and rear wheels are suppressed, stability of the vehicle is ensured in correspondence with load movement.

When in step 460 an affirmative determination is made processing proceeds to step 470 and the total of three control valves that are the control valves corresponding to the turn inside wheels of the front and rear wheels and the control valve corresponding to the turn outside wheel of the rear wheels are made ON. By this means the pressure increase gradients of the wheel cylinder pressures except the turn outside wheel side wheel cylinder of the front wheels are suppressed. That is, in the case of a very sharp turning state, because the ground load moves almost entirely to the turn outside wheel of the front wheels only, control matching this state is executed.

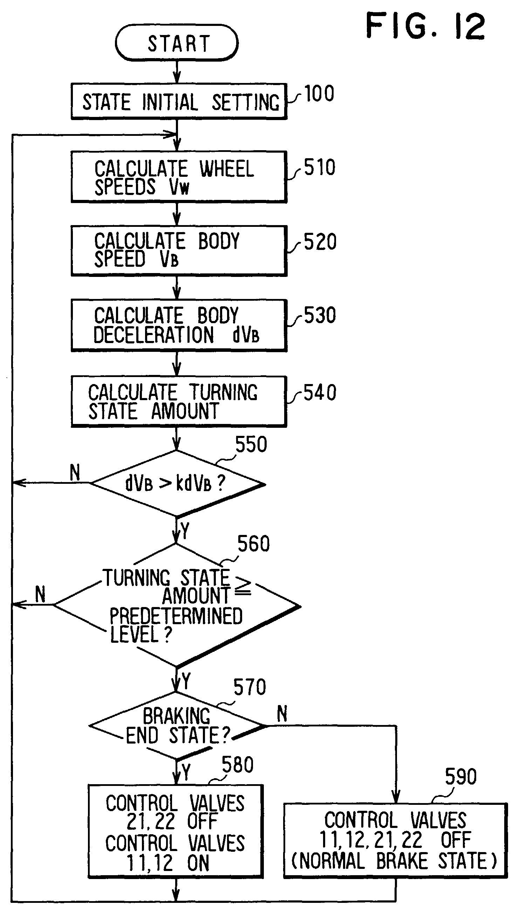

When during braking of the vehicle the pressure increase gradients of the wheel cylinder pressures are controlled by throttle effect in accordance with the turning state in this way, it is possible to increase the vehicle stability. In Fig. 11, the difference between change in the wheel cylinder pressure of when the control valve corresponding to the turn inside wheel of the rear wheels is made ON (shown with a dashed line) and change in the wheel cylinder pressure of the rear turn inside wheel using a conventional known two-position control valve having the two positions of open and closed (shown with a broken line) is shown. As shown in the figure, when the two-position control valve is used, holding control of the wheel cylinder pressure carried out in the closed position of the two-position control valve and pressure increase control carried out in the open position are alternately and repeatedly carried out by duty control carried out at a predetermined duty. As a result, the pressure increase gradient of the wheel cylinder pressure is suppressed. However, at the point P of the time when being shifted to pressure holding from pressure increase of the wheel cylinder pressure, because the flow of brake fluid between the wheel cylinder and the master cylinder is completely cut off, pulsation of fluid pressure occurs after the pressure increase. Along with this the wheel speed also changes in a wave, and inevitably the driver was given an uncertain feeling. Also, if this wheel cylinder pressure control is carried out for three wheels when the turning state of the vehicle is more than the above-mentioned third predetermined turning state, because the fluid pressure pulsation occurs in three wheels, there was the feeling of uncertain to the passenger being even greater. To contrary, when as in this embodiment the pressure increase gradient of the wheel cylinder pressure of the turn inner rear wheel is suppressed using the throttling position of a two-position valve having the two positions of open and throttling, as shown with a dashed line, the change in the wheel cylinder is smooth and also wheel speed fluctuation is suppressed and no feeling of uncertain is given to the driver. Further, because the flow of brake fluid between the master cylinder and the wheel cylinder is not cut off, the driver is not made to receive an anti-brake feeling (that the brake pedal can not be stepped on) and pedal pulsations. This kind of effect on the feeling of the driver is also provided in the embodiments above.

### (Fifth Embodiment)

Next, on the basis of Fig. 12, the control flow of a fifth embodiment will be described. In this fifth embodiment, it relates to control of wheel cylinder pressure when braking in a turning state has ended. Because the brake system construction described with Fig. 9 can be employed, the fifth embodiment will be explained on the basis of Fig. 9.

In step 100 state initial setting is carried out, and in step 510 wheel speeds VW are calculated. In step 520 a vehicle speed VB is calculated on the basis of the wheel speeds VW of the wheels. This vehicle speed VB is calculated by a known method, and for example the maximum wheel speed VW value is adopted as the vehicle speed VB. Then in step 530 a vehicle deceleration dVB is calculated from a change with time of the vehicle speed VB.

In step 540 a turning state amount is calculated. This turning state amount may be calculated by the same method as in the previous embodiment, and a left-right wheel speed difference can be used.

In step 550 it is determined whether or not the vehicle deceleration dVB is greater than a predetermined vehicle deceleration KdVB. By this means it is determined whether or not the vehicle is in a braking state with vehicle deceleration above a predetermined level. When determining the vehicle braking state by means of the vehicle deceleration dVB, because factors such as the road surface friction state or the road gradient are also included in the vehicle deceleration dVB, it is possible to determine a vehicle braking state in which these factors are also taken into account. When in this step 550 a negative determination is made processing returns to step 510, and when an affirmative determination is made processing proceeds to step 560. In step 560 it is determined whether or not the turning state amount is greater than a predetermined level. When a negative determination is made here processing returns to step 510, and when an affirmative determination is made processing proceeds to step 570. In step 570 the braking end state is determined. For this braking end state, it is sufficient to determine at least one of a state wherein from a turning braking state the stop switch has been changed to an OFF state, a state wherein the vehicle deceleration dVB or the change with time of the vehicle deceleration dVB have changed in the acceleration direction, or a state wherein a wheel slip has reduced. When here a negative determination is made, in step 590, the control valves are kept in their normal braking states.

When in step 570 an affirmative determination is made, processing proceeds to step 580 and the rear wheel side control valves 21, 22 are kept OFF and the front wheel side control valves 11, 12 are brought to their throttling positions.

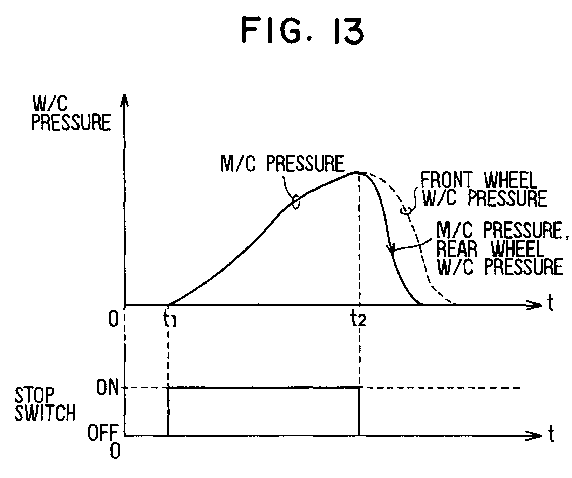

Change of wheel cylinder pressure of when the above control is executed is shown in Fig. 13A, and the effects will now be described with reference to Figs 13A and 13B.

It will be supposed that the stop switch 81 has been made ON at a time t1 and the vehicle is in a braking state. It will further be supposed that the turning state and the vehicle deceleration dVB are above predetermined levels at a time t2 and processing has proceeded to step 580 in the control flow. At this time, the master cylinder pressure PM and the brake fluid pressure of the rear wheel side wheel cylinders 6, 7 decrease similarly as shown with a solid line. However, the brake fluid pressure of the front wheel side wheel cylinders 4, 5 decreases with a lag compared to the rear wheel side brake fluid pressure, as shown with a dashed line. That is, as a result of the throttling effect of the control valves 21, 21 the pressure decrease gradient of the front wheel side wheel cylinder pressure is suppressed compared to that of the rear wheel side wheel cylinder pressure.

As a result of this, along with decrease of the brake fluid pressure acting on the front wheel side wheel cylinders grip of the front wheels is restored. But, since the pressure decrease gradient of the front wheel side wheel cylinders is gentle, the vehicle behavior of the vehicle body yaw direction, which increases along with the increase of the grip of the front wheels, can be made gentle. That is, by reducing the brake fluid pressure acting on the rear wheel side wheel cylinders earlier than the front wheel side wheel cylinders, it is possible to raise the tire grip of the rear wheels in advance and ensure stability of the vehicle. Thus, even when braking has been carried out as far as part-way through turning and the vehicle braking force is released more than a predetermined level part-way through this turning, there is the excellent effect that vehicle stability can be ensured and passenger feeling can be improved simultaneously.

When a negative determination is made in step 560 of Fig. 12 in this fifth embodiment, processing may proceed to the control flow of Fig. 10 and execute control of wheel cylinder pressure in a turning braking state. In this case, vehicle stability and passenger feeling can be improved both in a turning braking state and at the time of release of a turning braking state.

### (Sixth Embodiment)

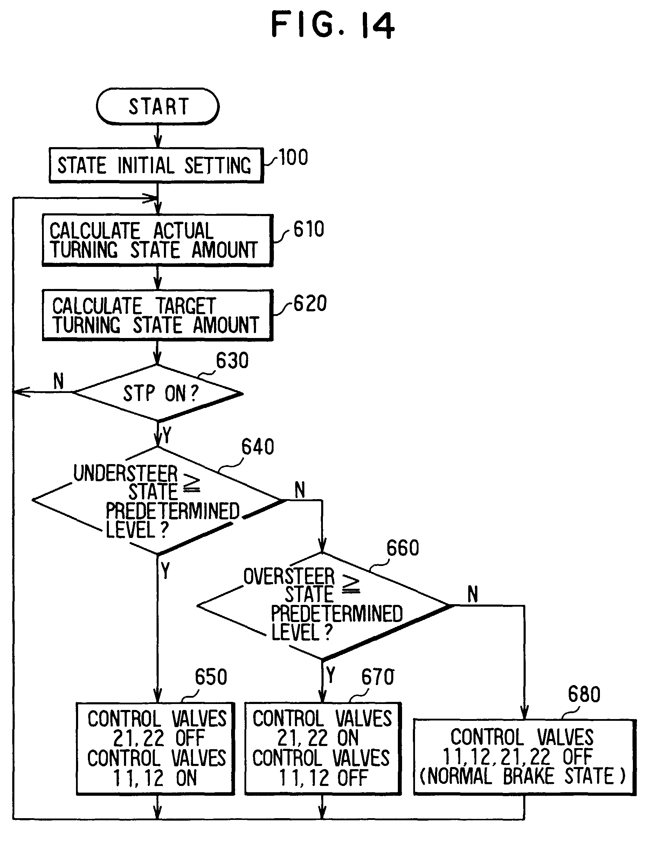

Next, on the basis of Fig. 14, the control flow of a sixth embodiment will be described. In this sixth embodiment also, because the brake system construction shown in Fig. 9 can be employed, the embodiment will be explained on the basis of this construction.

In step 100 state initial setting is carried out, and in step 610 an actual turning state amount is calculated. This actual turning state amount is a value expressing an actual turning state of the vehicle, and can be calculated on the basis of an output signal of a transverse acceleration sensor or the like not shown in the drawings.

In step 620, a target turning state amount is calculated. This target turning state amount is a value expressing a turning state being demanded by a driver by a steering operation of the driver, and for example may be obtained from an output signal of a steering sensor not shown in Fig. 9 and a vehicle speed VB or the like.

In step 630, it is determined whether or not the stop switch 81 is ON, and when a negative determination is made processing returns to step 610. When an affirmative determination is made, processing proceeds to step 640 and determines whether or not an understeer state of the vehicle is greater than a predetermined level. This understeer state is derived by means of a comparison between the above-mentioned actual turning state amount and the target turning state amount, and indicates a straight advance tendency state wherein the actual turning state amount is smaller than the target turning state amount by more than a predetermined level. When here an affirmative determination is made processing proceeds to step 650 and the rear wheel side control valves 21, 22 are kept OFF and the front wheel side control valves 11, 12 are made ON and brought to their throttling positions. As a result of this, because the pressure increase gradient of the front wheel side wheel cylinders 4, 5 is suppressed, a fall in the side force on the rear wheels becomes greater than a fall in the side force on the front wheels and it is possible to control the vehicle to a neutral steer state.

When in step 640 a negative determination is made processing proceeds to step 660 and it is determined whether or not an oversteer state of the vehicle is greater than a predetermined level. This oversteer state indicates a turning state such that the actual turning state amount is greater by more than a predetermined level than the target turning state amount. When here an affirmative determination is made, processing proceeds to step 670 and the front wheel side control valves 11, 12 are kept OFF and the rear wheel side control valves 21, 22 are made ON and brought to their throttling positions. As a result of this, a fall in the side force at the rear wheels is suppressed and a fall in the side force at the front wheels becomes large and consequently it is possible to control the vehicle to a neutral steer state. When in step 660 a negative determination is made, it is deemed to currently be in a neutral steer state of a predetermined range and current is not passed through the control valves and it is kept in the normal braking state.

Also when this kind of control is carried out, as in that described above, it is possible to improve vehicle stability and passenger feeling at the same time.

The invention is not limited to the embodiments described above.

### (Other Embodiment 1)

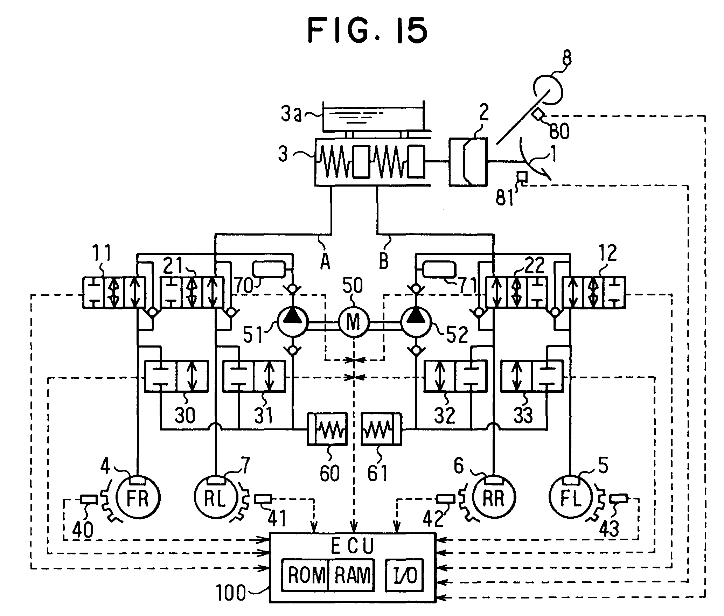

For example the construction shown in Fig. 15 can be employed for the brake system construction of the embodiments described above. In the construction in Fig. 15, so that anti-skid control can be executed, a motor 50 driven along with anti-skid control commencement and pumps 51, 52 for carrying out suction and delivery of brake fluid along with rotation of the motor 50, and reservoirs 60, 61 for temporarily holding brake fluid sucked by these pumps 51, 52 are provided. Also, pressure decrease control valves 30, 31, 32, 33 brought to closed positions in normal braking state and brought to open positions for decreasing the brake fluid pressures acting on the wheel cylinders 4, 5, 6, 7 are disposed. Accumulators 70, 71 provided on the delivery sides of the pumps 51, 52 suppress pulsations of brake fluid caused by pump delivery.

For the control valves 11, 12, 21, 22 in Fig. 15, three-position valves having, in addition to an open position for normal braking and a throttling position for executing control according to this invention, a closed position for cutting off flow of brake fluid from the master cylinder 3 during holding and decrease of wheel cylinder pressures in anti-skid control are employed.

The electronic control unit (ECU) 100 is made up of a ROM, a RAM and an I/O interface and so on, and carries out predetermined control processing on the basis of output signals outputted from a steering sensor 80 for detecting an operation angle of a steering wheel 8, a stop switch 81 and wheel speed sensors 40 through 43 and issues signals for controlling current supply to the valves 11, 12, 21, 22, and 30 through 33.

As is known, when slip state of a wheel is detected, control valves (any of 11, 12, 21, 22) corresponding to these slipping wheels are brought to their closed positions and also pressure-decrease valves (any of 30 through 33) corresponding to these slipping wheels are brought to their open positions so that the wheel cylinder pressures are reduced. Also, along with reduction of wheel slip, the control valves for the object wheels of control (any of 11, 12, 21, 22) are controlled to their open positions and a master cylinder pressure PM is made to transmit to the wheel cylinders (any of 4 through 7). At this time, when for example travelling on a road surface having a small road surface frictional coefficient, the transmission of the master cylinder pressure PM to the wheel cylinders may be conducted using the throttling positions of the control valves. For example in a road surface state such as an icy road when a high master cylinder pressure PM is made to transmit to the wheel cylinders after slip reduction, the wheels soon lock again and pressure-decrease is instantly repeated. Because a braking force does not sufficiently work in the pressure-decrease state, there is the concern that the greater the ratio of the execution time of pressure-decrease becomes with respect to pressure-increase or holding control indeed the braking distance will lengthen. However, if pressure-increase of the wheel cylinder pressures is carried out using the throttling position in accordance with the road friction state, for example even if the pedal stepping is strong and the master cylinder pressure PM is high, because the pressure increase gradient of the wheel cylinder pressures can be suppressed, it is possible to realize optimal anti-skid control and shorten the braking distance to the utmost. If not just the road surface state but when the value of the master cylinder pressure PM is greater than a predetermined level, wheel cylinder pressure increase is carried out using the throttling positions, a still greater effect can be achieved.

The shown positions of the valves in Fig. 15 are the positions of the normal braking state.

If the embodiments described above (except for the control flow in the fifth embodiment in which control is executed in the braking termination state only) are practiced together with anti-skid control with the construction of Fig. 15, it is possible to delay the timing at which anti-skid control is started, and the passenger brake control region can be widened.

### (Other Embodiment 2)

In the embodiments described above (for example the first embodiment), for example using the signal from the stop switch 81, pressure increase gradient lowering control using throttling positions of control valves was executed from an initial stage of braking after wheel braking was started substantially by the action of a master cylinder pressure PM produced by a brake pedal operation. However, irrespective of this, for example, engine braking is detected and control valves are controlled to their throttling positions, and from the control starting stage at which brake fluid flows from the master cylinder to the wheel cylinders the flow amount of brake fluid to the wheel cylinders may be reduced compared with the wheel cylinders of non-controlled wheels, so that the pressure increase gradient of the wheel cylinder pressures is made to have a delay. Also, for example in a state wherein the brake pedal is stepped on part-way through a turn, even if until part-way through the turn it was a non-controlled state with no brake fluid pressure action, in accordance with the turning state (for example a steering angle or a transverse acceleration) control valves corresponding to a turn inside wheel or the like may be made ON in advance and a pressure increase gradient difference thereby provided between the turn outside wheels and the turn inside wheels from the initial stage after control originating in a brake action of the driver starts to be carried out. The control object wheel whose control valve is made ON at this time may be determined using the control flow shown in Fig. 10. If this is done, it is possible to increase stability from the initial stage of control.

### (Other Embodiment 3)

Also, as a condition of making the control valves ON states, whether or not it is a braking state in low µ road travel can be employed. For example, in the flow chart shown in Fig. 4, in step 210 the road surface frictional coefficient (road surface µ) or a road surface state corresponding to this road surface µ is detected and in step 220 it is determined whether or not it is a low µ road braking state. Then, when an affirmative determination is made, the control valves of the rear wheels are made ON and brought to their throttling positions and the pressure increase gradient of the wheel cylinder pressure of the rear wheels is reduced compared to the pressure increase gradient of the front wheel side wheel cylinder pressure. Also, by controlling the control valves in accordance with the road surface µ, it is possible to exhibit the same effects as the embodiments described above. The control valves may be controlled for all of the wheels and the transmission characteristics of the master cylinder pressure to the wheel cylinders of all of the wheels may be delayed. That is, when the road surface µ is low, the initial braking may be delayed with respect to pedal operation of a driver. In this case, even if the driver has stepped on the brake pedal without knowing that it is a low µ road surface, it is possible to prevent wheels soon locking and the vehicle becoming unstable in the initial braking state.

### (Other Embodiment 4)

Also, in step 150 of Fig. 2 in the first embodiment, the ON of control valves of control object rear wheels was released on the basis of whether or not a predetermined time has elapsed from ON of a stop switch. However, irrespective of this, for example when a state wherein the increase change in the master cylinder pressure is less than a predetermined level and there has almost ceased to be any increase in the brake pedal stepping is detected, the ON of the control object control valves is released. Or, a pressure decrease change of the master cylinder pressure or a brake pedal return or the like may be detected and ON of the control valves then released. If this is done, for example even when pumping brakes is carried out on a downhill slope or the like, it is possible to exhibit an effect of the throttling positions of the control valves in accordance with brake pedal stepping during pumping brakes.

### (Other Embodiment 5)

Also, as a condition for bringing the rear wheel side control valves to the throttling position, braking from a high-speed travel state may be used. For example in step 210 of Fig. 4 of the second embodiment a vehicle speed VB may be calculated and in step 220 it may be determined whether or not this vehicle speed VB is greater than a predetermined vehicle speed KVB and also the vehicle is in a braking state. When an affirmative determination is made the rear wheel side control valve 20 is made ON. In braking from high-speed travel, it can be anticipated that the brake pedal is often strongly stepped on by the driver, and the possibility of the vehicle becoming unstable is large. However, by throttling the flow of brake fluid to the rear wheel side wheel cylinders and making the pressure increase gradient of the front wheel side wheel cylinder pressure large compared with the rear wheels, because it is possible to make it understeer side vehicle behavior characteristics, stability can be increased.

### (Other Embodiment 6)

Also, the control valves may be controlled in accordance with the load state of the vehicle (number of passengers or goods or the like). That is, when the vehicle load state is large, because the front-rear wheel ideal braking force distribution is not very biased between the front wheels and the rear wheels, no difference is attached to the pressure increase gradients of the front wheel side and rear wheel side wheel cylinder pressures using the throttling positions of the control valves. When the vehicle load state is small, because the front-rear wheel ideal braking force distribution is greatly biased to the front wheel side, the rear wheel side control valve is brought to the throttling position and suppressed lower than the master cylinder pressure and the wheel cylinder pressure of the front wheels.

### (Other Embodiment 7)

Also, in the control flow of Fig. 12 in the fifth embodiment, an example wherein control of control valves in a braking ending state is carried out during the vehicle turning was shown. However, this control valve control in a braking ending state i.e. step 570 and step 580 of Fig. 12 can be applied to the first through sixth or other embodiments.

### (Other Embodiment 8)

Also, in combination with the first, second embodiments, it is also possible to execute control valve control immediately before stopping of the vehicle in a straight line advancing and braking states. That is, when immediately before stopping of the vehicle, i.e., when the vehicle speed VB becomes lower than a predetermined speed (for example VB=4km/s), the rear wheel side control valve is made ON and the rear wheel side pressure decrease gradient is made smaller than the pressure increase gradient of the front wheel side wheel cylinder pressure and thereby given a delay therebetween. If this is done, immediately before stopping of the vehicle, because the grip (road surface reaction) exhibited by the rear wheels is maintained and also grip exhibited by the front wheel side wheels becomes small, the rear side of the vehicle sinks. As a result, so-called swing braking (caused by a vehicle body state wherein the vehicle body falls forward immediately before the stopping of the vehicle) can be suppressed.

### (Other Embodiment 9)

Also, in the brake system construction shown in Fig. 15, as an additional construction to the first brake line system A, a known proportioning valve may be reversely connected to the brake line between the master cylinder 3 and the branch parts to the wheel cylinders 4, 7. That is, this proportioning valve conducts flow of brake fluid from the master cylinder 3 to the wheel cylinder side substantially without attenuation, and flow of brake fluid to the master cylinder 3 from the wheel cylinder side as well as the delivery side of the pump 51 is conducted pressure-attenuated in proportion with the brake fluid pressure on the wheel cylinder side if the brake fluid pressure on the wheel cylinder side is greater than a split-point pressure of the proportioning valve. If the wheel cylinder side pressure is smaller than the split-point pressure, flow from the wheel cylinder side and the delivery side of the pump 51 to the master cylinder 3 side is conducted without pressure attenuation. In this way, the proportioning valve is connected so that the action carried out by the proportioning valve on the brake fluid is the reverse of conventionally. Then, for example when in anti-skid control or the like the wheel cylinder pressure has been reduced, a brake fluid amount corresponding to the pressure reduction is delivered by the pump 51 to between the proportioning valve and the control valves. As a result, it is possible to make the brake fluid pressure on the wheel cylinder side of the proportioning valve higher than the master cylinder pressure. If this brake fluid pressure higher than the master cylinder pressure is applied to the wheel cylinders, it is possible to produce a large vehicle braking force. The same construction can also be added to the second brake line system B.

When this kind of construction (proportioning valve) is added, even when by control flows of embodiments described above for example the control valve 21 has been controlled to the throttling position and the control valve 11 has been controlled to the open position, compared to when only the master cylinder pressure is used as the base pressure of the wheel cylinder pressure, because it is possible to exhibit the brake assist function mentioned above of making the pressure increase gradient and pressure increase amount of the wheel cylinder pressure large, the braking distance can be shortened. Also, it is possible to achieve the effect that even if there is a flow resistance due to the throttling position there is no resulting braking deficiency. Also, when the brake pedal is returned by the driver and the master cylinder pressure falls, because along with this brake fluid flows from the wheel cylinder side to the master cylinder through the proportioning valve, it is possible to realize a braking action matching the will of the driver.

In Fig. 15 the connection part of the pump delivery destination was the above-mentioned branch part, but the pump delivery connection destination is made between the above-mentioned branch part and either the control valve 11 or the control valve 21, and also the above-mentioned proportioning valve is disposed between the branch part and the connection part of the pump delivery destination. If this is done, only the wheel cylinder to which this proportioning valve is connected can be increased in pressure more than the master cylinder pressure.

Also, when the wheel cylinder pressure is made higher than the master cylinder pressure, not only is the brake fluid of the pressure-reduction amount resulting from anti-skid control used, but for example in accordance with a turning state irrespective of anti-skid control brake fluid pressure of a turn inside wheel may be pressure-reduced and the brake fluid of this pressure-reduction may be pump-delivered to raise brake fluid pressure of a turn outside wheel higher than the master cylinder pressure.

Also, not only the brake fluid caused by reducing the wheel cylinder pressure pump-delivered to raise a wheel cylinder pressure above the master cylinder pressure is used but also for example a pipe extending from the pump suction side and having its other end connected to between the master cylinder 3 and the proportioning valve is added and by sucking and delivering brake fluid from the master cylinder side through this pipe the wheel cylinder pressure is made greater than the master cylinder pressure. A two-position valve having the two positions of open and closed may be disposed in this pipe and made normally in its closed position and when control to make the wheel cylinder pressure higher than the master cylinder pressure is carried out this two-position valve made open-position and suction of brake fluid carried out by the pump from the master cylinder side. If this is done, irrespective of anti-skid control or the like even in a normal braking state, the base pressure for forming the wheel cylinder pressure can be made higher than the master cylinder pressure and also the pressure increase gradient of the base pressure can be made larger than the pressure increase gradient of the master cylinder pressure and a large braking force can be secured and the braking distance can be shortened.

This kind of assist control for making the wheel cylinder pressure higher than the master cylinder pressure may be executed at the time of stop switch ON, the vehicle deceleration dVB above a predetermined level, or a pedal stroke speed or a pedal stroke acceleration indicating a panic braking state above a predetermined level. At the time of execution of this brake assist, brake fluid pressure may be increased with a pressure increase gradient smaller than that of the master cylinder pressure with respect to the wheel cylinders of all the wheels or of the rear wheel side only.

Instead of the above-mentioned proportioning valve, an open/closed two-position valve may be employed and the wheel cylinder pressure may be made higher than the master cylinder pressure using its closed position.

In a brake system having a brake assist function of this kind, if the present invention is applied, it is possible to surely obtain vehicle stability in the initial stage of braking particularly when a pressure higher than the master cylinder pressure has been applied to the wheel cylinders by brake assist.

### (Other Embodiment 10)

Also, this invention can be applied not only at a time of vehicle braking originating in a brake pedal operation of a driver but also for example in automatic braking for danger avoidance and automatic braking of fixed inter-vehicle distance travel, or automatic braking of constant speed travel. In the other embodiment 10, instead of the above-mentioned proportioning valve, when an open/closed two-position valve is employed, by control to the closed position of this two-position valve, pump driving, and control bringing the two-position valve of the above-mentioned pipe to the open position, automatic braking can be executed.

### (Other Embodiment 11)

Also, the invention can be applied to a so-called brake-by-wire braking system which converts a state of brake pedal operation of a driver (for example pedal stroke) into a predetermined electrical signal and has a production source for producing a brake fluid pressure in correspondence with this electrical signal and brake fluid pressure from this production source is transmitted to the wheel cylinders and produces a vehicle braking force.

### (Other Embodiment 12)

The first through sixth embodiments and the first through eleventh other embodiments described above can be executed in a plurality of combinations with each other, and synergetic effects can be obtained.

### (Other Embodiment 13)

In the embodiments described above a flow resistance was increased by means of throttling, but for example the control valves 10, 11, 12, 20, 21, 22 may be made two-position valves having open and closed and these two-position valves duty controlled. By increasing the flow resistance of the ducts by this duty control it is possible to obtain similar effects in the aspect of travel stability improvement. The execution timing of this duty control is equivalent to the ON time of the control valves in the embodiments described above. Accordingly, by releasing this duty control, it is possible to make a control object wheel cylinder pressure and a non-control object wheel cylinder pressure equal.

### (Other Embodiment 14)

Manual switches may be provided so that it is possible to switch the control valves 10, 20, 11, 21, 22, 12 mentioned above between their throttling positions and their open positions by a manual operation of the driver. If this is done, selecting when according to the judgement of the driver a low µ road is being travelled, or when wanting to suppress the vehicle body swing-motion to the front during initial braking arising at a time of sudden braking or the like, it is possible to change the braking characteristics of pedal operation i.e. the transmission characteristics of the master cylinder pressure to the wheel cylinders.

## Claims

1. A brake system for a vehicle comprising:
a brake fluid pressure producing source (3) for producing a brake fluid pressure at a time of vehicle braking;
first wheel braking force producing means (4, 5) for receiving the brake fluid pressure and producing a wheel braking force in a first wheel;
second wheel braking force producing means (6, 7) for receiving the brake fluid pressure and producing a wheel braking force in a second wheel;
a first duct (A) connecting the brake fluid pressure producing source and the first wheel braking force producing means;
a second duct (B) connecting the brake fluid pressure producing source and the second wheel braking force producing means; and
controlling means (Figs. 2, 4, 6, 10, 12, 14) for, by changing an in-duct flow diameter in either the first or the second duct through which the brake fluid flows, establishing a difference between a transmission characteristic to the first wheel braking force producing means and a transmission characteristic to the second wheel braking force producing means of a brake fluid pressure in the brake fluid pressure producing source.

2. A brake system for a vehicle comprising:
a brake fluid pressure producing source (3) for producing a brake fluid pressure at a time of vehicle braking;
first wheel braking force producing means (4, 5) for receiving the brake fluid pressure and producing a wheel braking force in a first wheel;
second wheel braking force producing means (6, 7) for receiving the brake fluid pressure and producing a wheel braking force in a second wheel;
a first duct (A) connecting the brake fluid pressure producing source and the first wheel braking force producing means;
a second duct (B) connecting the brake fluid pressure producing source and the second wheel braking force producing means;
a first control valve (10) disposed in the first duct and having two positions of a throttling position for exerting a flow resistance resulting from throttling in a flow route of the brake fluid and an open position having substantially no flow resistance;
a second control valve (20) disposed in the second duct and having two positions of a throttling position for exerting a flow resistance resulting from throttling in a flow route of the brake fluid and an open position having substantially no flow resistance, and
controlling means (Figs. 2, 4, 6, 10, 12, 14) for, by changing an in-duct flow diameter by controlling either the first or the second control valve from the open position to the throttling position, establishing a difference between a transmission characteristic to the first wheel braking force producing means and a transmission characteristic to the second wheel braking force producing means of a brake fluid pressure in the brake fluid pressure producing source.

3. A brake system for a vehicle according to claim 1 or claim 2, wherein the controlling means establishes a difference between the transmission characteristics at the time of an increase of a brake fluid pressure acting on the first and second wheel braking force producing means.

4. A brake system for a vehicle according to claim 3, wherein the controlling means uses as a base pressure a brake fluid pressure produced in the brake fluid pressure producing source at the time of an increase of a brake fluid pressure acting on the first and second wheel braking force producing means.

5. A brake system for a vehicle according to claim 3, wherein the controlling means uses as a base pressure a brake fluid pressure formed by pump delivery of a pump (51, 52) driven when executing anti-skid control for suppressing wheel slip at the time of an increase of a brake fluid pressure acting on the first and second wheel braking force producing means.

6. A brake system for a vehicle according to claim 5, wherein the controlling means causes the pump to form a second brake fluid pressure higher than a brake fluid pressure produced in the brake fluid pressure producing source and establishes a difference between the transmission characteristics to the first and second wheel braking force producing means of this second brake fluid pressure.

7. A brake system for a vehicle according to any one of claim 1 through claim 6, wherein the controlling means has load movement detecting means (Fig. 2, step 120) for detecting a load movement of the vehicle, and
on the basis of a detection result of this load movement detecting means, the controlling means establishes a difference in pressure increase gradients of brake fluid pressures acting on the first and second wheel braking force producing means by increasing a flow resistance to brake fluid flowing from the brake fluid pressure producing source to the wheel braking force producing means of whichever of the first wheel and the second wheel has the smaller load acting on it at a time of wheel braking.

8. A brake system for a vehicle according to any one of claim 1 through claim 6, wherein the controlling means establishes said difference for a predetermined time from a time point at which a brake fluid pressure is produced in the brake fluid pressure producing source substantially.

9. A brake system for a vehicle according to claim 8, wherein the controlling means (Fig. 2) establishes said difference by making small an in-duct flow diameter of said second duct connected to said second wheel braking force producing means which is provided for a rear wheel of the vehicle.

10. A brake system for a vehicle according to any one of claim 1 through claim 6, wherein the controlling means has vehicle deceleration detecting means (Fig. 4, step 210) for detecting a vehicle deceleration of the vehicle, and
the controlling means establishes said difference when on the basis of a detection result of the vehicle deceleration detecting means it is determined that a vehicle deceleration greater than a predetermined level is occurring.

11. A brake system for a vehicle according to any one of claim 1 through claim 6, wherein the controlling means has vehicle speed detecting means for detecting a vehicle speed of the vehicle, and
on the basis of a detection result of the vehicle speed detecting means, the controlling means establishes said difference at a time of braking from a speed higher than a predetermined level so as to make a pressure increase gradient of a brake fluid pressure transmitted to the second wheel braking force producing means provided for a rear wheel smaller compared to the first wheel braking force producing means provided for a front wheel.

12. A brake system for a vehicle according to any one of claim 1 through claim 11, wherein the controlling means has turning state detecting means (Fig. 10, step 420) for detecting a turning state of the vehicle, and
on the basis of a detection result of the turning state detecting means, the controlling means establishes said difference so as to provide a difference in pressure increase gradients of brake fluid pressures transmitted to the wheel braking force producing means in a turn outside wheel and a turn inside wheel.

13. A brake system for a vehicle according to any of claim 1 through claim 11, wherein the controlling means has actual turning state detecting means (Fig. 14, step 610) for detecting an actual turning state amount of the vehicle and target turning state calculating means (Fig. 14, step 620) for calculating a target turning state amount in correspondence with a turning operation of a driver, and
the controlling means establishes said difference so as to change the vehicle behavior on the basis of the actual turning state amount and the target turning state amount.

14. A brake system for a vehicle according to any one of claim 1 through claim 7 and claim 11 through claim 13, wherein the controlling means changes the an in-duct flow diameter from before a brake fluid pressure is substantially produced in the brake fluid pressure producing source and establishes a difference between the transmission characteristics to the first and the second wheel braking force producing means of brake fluid pressure in an initial stage of braking.

15. A brake system for a vehicle according to any one of claim 1 through claim 14, wherein operation of the controlling means is ceased after a predetermined time elapses since the controlling means starts to establish said difference.

16. A brake system for a vehicle according to any one of claim 1 through claim 14, wherein operation of the controlling means is ceased when an increase of a brake fluid pressure produced in the brake fluid pressure producing source ends.

17. A brake system for a vehicle comprising:
a brake fluid pressure producing source (3) for producing a brake fluid pressure at a time of vehicle braking;
wheel braking force producing means (4 to 7) for receiving the brake fluid pressure and producing a wheel braking force;
a duct (A, B) connecting the brake fluid pressure producing source and the wheel braking force producing means;
a control valve (11, 12, 21, 22) disposed in the duct and having two positions of a closed position cutting off a flow of brake fluid and an open position having substantially no flow resistance;
slip state detecting means (40 to 43, 100) for detecting a slip state of the wheel;
anti-skid control means (11, 12, 21, 22, 30 to 33, 50 to 52, 100) for, on the basis of a detection result of the slip state detecting means, reducing a brake fluid pressure acting on the wheel braking force producing means to cancel an excessive wheel slip; and
controlling means (100) for, before execution of the anti-skid control means, reducing a pressure increase gradient of brake fluid pressure transmitted from the brake fluid pressure producing source to the wheel braking force producing means by making large an in-duct flow resistance of the duct by duty-controlling the control valve between the closed position and the open position.

18. A brake system for a vehicle comprising:
a brake fluid pressure producing source (3) for producing a brake fluid pressure at a time of vehicle braking;
first wheel braking force producing means (4, 7) for receiving the brake fluid pressure and producing a wheel braking force in a first wheel;
a first duct (A) connecting the first brake fluid pressure producing source and the first wheel braking force producing means;
a first control valve (11, 21) disposed in the first duct and having two positions of a closed position cutting off a flow of brake fluid and an open position having substantially no flow resistance;
second wheel braking force producing means (5, 6) for receiving the brake fluid pressure and producing a wheel braking force in a second wheel;
a second duct (B) connecting the second brake fluid pressure producing source and the second wheel braking force producing means;
a second control valve (12, 22) disposed in the second duct and having two positions of a closed position cutting off a flow of brake fluid and an open position having substantially no flow resistance;
slip state detecting means (40 to 43, 100) for detecting a slip state of the wheels;
anti-skid control means (11, 12, 21, 22, 30 to 33, 50 to 52, 100) for, on the basis of a detection result of the slip state detecting means, reducing brake fluid pressures acting on the first and second wheel braking force producing means to cancel an excessive wheel slip; and
controlling means (100) for, before execution of the anti-skid control means, establishing a difference between pressure increase gradients of brake fluid pressure transmitted to the first wheel braking force producing means and of brake fluid pressure transmitted to the second wheel braking force producing means from the brake fluid pressure producing source by making large an in-duct flow resistance of the first or second duct by duty controlling either the first or the second control valve between the closed position and the open position.

19. A brake system for a vehicle according to claim 17 or claim 18, wherein after a predetermined time elapses from the start of operation of the controlling means duty control is prohibited and the open position is maintained.

20. A brake system for a vehicle comprising:
a master cylinder (3) for mechanically producing a master cylinder pressure in response to a stepping operation to a brake pedal of a driver at a time of vehicle braking;
a wheel cylinder (4 to 7) for receiving the master cylinder pressure and producing a wheel braking force;
a duct (A, B) connecting the master cylinder and the wheel cylinder;
throttling means (10, 11, 12, 20, 21, 22) disposed in the duct for substantially producing an orifice effect by throttling a brake fluid flow area in the duct; and
controlling means (100) for varying the transmission characteristic to the wheel cylinder of the master cylinder pressure produced with respect to a brake pedal operation of the driver by controlling the throttling means.

21. A brake system for a vehicle according to claim 20, wherein the controlling means has sudden braking detecting means for detecting a sudden stepping of the brake pedal of the driver and, at a time of sudden braking, throttles the duct and thereby delays the transmission characteristic to the wheel cylinder of the master cylinder pressure.

22. A brake system for a vehicle according to claim 21, wherein the controlling means delays the transmission characteristic only in an initial stage of the sudden braking.

23. A brake system for a vehicle according to claim 20, wherein the controlling means has low µ road detecting means for detecting a low µ road and, when determining that the vehicle travels on a low µ road, delays the transmission characteristic using the throttling means.

24. A brake system for a vehicle according to claim 22, wherein the controlling means has low µ road detecting means for detecting a low µ road and, when determining that the sudden braking is applied during travel on a low µ road, delays the transmission characteristic using the throttling means.

25. A brake system for a vehicle according to any one of claim 20 through claim 24, wherein the controlling means delays the transmission characteristic for each brake line system, for each wheel, or for the front wheels and for the rear wheels of a brake system made up of a diagonal brake line system or a front-rear brake line system of a four wheeled vehicle.

26. A brake system for a vehicle comprising:
a master cylinder (3) for mechanically producing a master cylinder pressure in response to a stepping operation to a brake pedal of a driver at a time of vehicle braking;
a wheel cylinder (4 to 7) for receiving the master cylinder pressure and producing a wheel braking force;
a duct (A, B) connecting the master cylinder and the wheel cylinder;
throttling means (10, 11, 12, 20, 21, 22) disposed in the duct for substantially producing an orifice effect by throttling a brake fluid flow area in the duct; and
switching means for driving the throttling means to exhibit said orifice effect on the basis of a selection of the driver.
